# EUROPÄISCHE PATENTSCHRIFT

(11) **EP 0 615 995 B1**
(45) Veröffentlichungstag und Bekanntmachung des Hinweises auf die Patenterteilung: **09.07.1997**
(21) Anmeldenummer: 93121162.7
(22) Anmeldetag: 31.12.1993
(51) Int. Cl.: C08G 63/54, C08G 63/88, C08F 299/04

(54) **Verfahren zur Herstellung hochmolekularer Polyester**
Preparation process of high molecular weight polyesters
Procédé de préparation de polyester de poids moléculaire élevé

(30) Priorität: 13.03.1993 DE 4308049
(43) Veröffentlichungstag der Anmeldung: 21.09.1994
(73) Patentinhaber: GAF-HÜLS CHEMIE GMBH, D-45764 Marl (DE)
(72) Erfinder: Kleine Homann, Walter, Dr., D-48249 Dülmen (DE); Grosse-Puppendahl, Thomas, D-45721 Haltern (DE)

(56) Entgegenhaltungen:
- EP-A- 0 344 733
- FR-A- 2 303 037
- PATENT ABSTRACTS OF JAPAN, Band 4, Nr. 54 (C-8)(536), 23 April 1980

## Beschreibung

Gegenstand der Erfindung ist ein Verfahren zur Herstellung von hochmolekularen Polyestern durch Umsetzen aromatischer Dicarbonsäure mit einem Gemisch aus Alkan- und Alkendiolen unter weitgehendem Ausschluß von Sauerstoff in Gegenwart eines Katalysators.

Hochmolekulare Polyester sind ausgezeichnete Werkstoffe mit spezifischen Eigenschaften, die sie befähigen, als Rohstoff für technisch hochwertige, stark belastbare Produkte zu dienen. Typisch für diesen Anwendungsbereich ist, daß häufig - nach technischen Maßstäben beurteilt - relativ kleine Mengen mit einem exakt vorgegebenen hohen Molekulargewicht nachgefragt werden.

Da in der großtechnischen Produktion Polyester kontinuierlich bzw. diskontinuierlich in großen Mengen mit einem einheitlichen Molekulargewicht anfallen, ist es meist unwirtschaftlich und technisch auch schwierig, kleinere Teilmengen mit einem festgelegten hohen Molekulargewicht zur Verfügung zu stellen.

Aus dem Stand der Technik sind Polyester mit hohem Molekulargewicht bekannt. Sie enthalten u. a. Reste ungesättigter Monomerkomponenten, die ggf. mit thermolabilen Verbindungen vernetzt werden (DE-OSS 2 509 726; 2 509 790; 2 552 424). Charakterisch für diesen Stand der Technik ist, daß bereits bei der Herstellung das endgültige Molekulargewicht festgelegt werden muß. Eine nachträgliche Manipulation des Molekulargewichtes ist unmöglich bzw. führt zu einem Abfall der Produkteigenschaften.

Aufgabe der vorliegenden Erfindung war es, einen Weg zu finden, nachdem es möglich ist, auch kleinere Mengen Polyester mit hohem Molekulargewicht vorteilhaft herzustellen.

Diese Aufgabe wird erfindungsgemäß durch ein Verfahren gelöst, in dem die Polykondensationsstufe bis zu einer Viskositätszahl im Bereich von 50-140 cm³/g geführt wird und in einer zweiten getrennten Stufe der so erhaltene Polyester mit 0,001 bis 8 Gew.-% eines Radikalbildners, der bei Temperaturen im Bereich von 130 bis 350 °C mit einer Halbwertzeit von 5 s bis 120 Min. zerfällt, beaufschlagt und anschließend in der Schmelze bis zur notwendigen Viskositätszahl weiter reagiert.

Die Polyester werden durch Veresterung oder Umesterung und anschließende Polykondensation von aromatischen Dicarbonsäuren oder deren polyesterbildenden Derivaten sowie dem entsprechenden Diolgemisch in Gegenwart von Katalysatoren hergestellt (Sorenson und Campbell, **Preparative Methods of Polymer Chemistry**, Interscience Publishers Inc., (N. Y.), 1961, Seiten 111 bis 127; **Kunststoff-Handbuch**, Band VIII, C. Hanser Verlag München, 1973; J. Polym. Sci., Part A 1, 4, Seiten 1851 bis 1859, 1966).

Die Reaktionstemperaturen liegen im Bereich von 160 bis 350 °C, vorzugsweise im Bereich von 170 bis 280 °C. Die genannte Reaktion wird unter weitgehendem Ausschluß von Sauerstoff durchgeführt. Aus diesem Grunde wird in einer Intertgasatmosphäre gearbeitet. Als Inertgas eignen sich z. B. Edelgase, Stickstoff, Kohlendioxid etc. Es wird bei Normaldruck oder im Vakuum gearbeitet. Bevorzugt wird die Polykondensationsstufe im Vakuum durchgeführt.

Nach dem erfindungsgemäßen Verfahren werden vorzugsweise Poly(ethylenterephthalat) und Poly(butylenterephthalat), hergestellt.

Als aromatische Dicarbonsäure kommt zur Hauptsache Terephthalsäure infrage. Es können aber auch andere aromatische Dicarbonsäuren wie z. B. Phthalsäure, Isophthalsäure, Naphthalindicarbonsäure u. ä. sowie deren Gemische eingesetzt werden.

Bis zu 30 Mol-% der aromatischen Dicarbonsäure in den Polyestern können durch an sich bekannte andere Dicarbonsäuren mit 2 bis 36 C-Atomen im Kohlenstoffgerüst ersetzt werden. Beispiele geeigneter Dicarbonsäuren sind Isophthalsäure, Phthalsäure, 1.4-Cyclohexandicarbonsäure, Adipinsäure, Sebazinsäure, Azelainsäure, Decandicarbonsäure, Dimerfettsäure.

Die Diolkomponente wird einerseits durch Alkandiole mit 2 bis 12 C-Atomen in der Kohlenstoffkette gebildet. Bevorzugt sind hierbei Ethylenglykol und Butandiol-1.4. Zum anderen werden Alkendiole mit 4 bis 12 C-Atomen in der Kohlenstoffkette eingesetzt. Bevorzugt werden Butendiol-1.4., 3-Methyl-2-penten-1,5-diol verwendet.

Bis zu 30 Mol-% der Alkandiolkomponente des Polyesters können durch andere Diole, wie beispielsweise Neopentylglykol, 1.5-Pentandiol, 1.6-Hexandiol, 1.4- bzw. 1.3-Dimethylolcyclohexan oder 1.12-Dodecandiol oder deren Gemisch ersetzt sein.

Das Alkandiol und Alkendiol werden im Verhältnis 0,1 - 99,9 Mol-% bis 99,9 - 0,1 Mol-%, vorzugsweise 80 - 99,5 Mol-% bis 20 - 0,5 Mol-% eingesetzt.

Unter den Begriff Polyester werden auch Blockcopolyester gerechnet. Derartige Produkte werden z. B. in Chimia 28 (9), Seiten 544 bis 552 (1974) und in Rubber Chemistry and Technology 50, Seiten 688 bis 703 (1977) beschrieben. Diese Blockcopolyester enthalten neben den obengenannten aromatischen Dicarbonsäuren und Diolen ein Poly(oxyalkylen)diol mit einem Molgewicht im Bereich von etwa 600 bis 2 500. Bevorzugte Poly(oxyalkylen)diole sind Poly(oxyethylen)diol, Poly(oxypropylen)diol und Poly(oxytetramethylen)diol. Der Anteil der Poly(oxyalkylen)diole liegt im Bereich von 4 bis 40 Gew.-%, vorzugsweise von 10 bis 35 Gew.-% (bezogen auf den gesamten Blockcopolyester).

Die Polykondensationsstufe wird anfangs bis zu einer Viskositätszahl J = 50 - 140 cm³/g, vorzugsweise J = 80 - 120 cm³/g geführt. Anschließend läßt man in einer zweiten getrennten Stufe in der Schmelze in Gegenwart eines Radikalbildners weiterreagieren.

Hierbei wird bei Temperaturen im Bereich von 130 - 350 °C, vorzugsweise von 180 - 280 °C, gearbeitet.

Als Radikalbildner werden solche gewählt, deren Zerfall bei den obengenannten Temperaturen eine Halbwertszeit im Bereich von 5 s - 120 Min., vorzugsweise von 1 - 60 Min., aufweist.

Die Radikalbildner werden in einer Menge im Bereich von 0,001 - 8 Gew.-%, von 0,01 - 5 Gew.-%, bezogen auf den Polyester eingesetzt.

Als Radikalbildner kommen organische Peroxide wie (cyclo)aliphatische bzw. aromatische Peroxide, Hydroperoxide oder Perketale, wie z. B. 2.5-Bis(tert. butylperoxi)-2.5-dimethylhexan, Diisopropylbenzol-mono-hydroperoxid, Dicumylperoxid und 3.3.6.6.9.9-Hexamethyl-1.2.4.5-tetraoxacyclononan, organische Verbindungen mit einer labilen C-C-Bindung wie z. B. 2.3-Dimethyl-2.3-diphenylbutan, 3.4-Dimethyl-3.4-diphenylhexan und Poly-1.4-diiso-propylbenzol, oder organische Verbindung mit einer labilen N-N-Bindung wie z. B. 2.2'-Azo-bis(2-acetoxy-propan) in Frage.

Zusätzliche Einzelheiten zu den Radikalbildnern bezüglich Zerfallstemperaturen, Halbwertszeiten etc, können bekannten Firmendruckschriften der Hersteller entnommen werden. Solche Druckschriften sind beispielsweise **Organic Peroxides for Crosslinking Polyolefins and Elastomers** der Fa. elf atochem, Deutschland aus 10/92 oder **Initiators for Polymer Production** der Fa. Akzo, Niederlande, aus 4/89.

Die Polyester, die nach dem erfindungsgemäßen Verfahren hergestellt worden sind, weisen eine Viskositätszahl bis ≦ 400 cm³/g, vorzugsweise von 100 bis 300 cm³/g, auf.

Die erfindungsgemäß erhaltenen Polyester können auf üblichen Maschinen durch Spritzguß oder Extrusion zu Formmassen verarbeitet werden.

Die Polyester können dementsprechend noch Hilfs- und Zusatzstoffe enthalten. Hierfür kommen z. B. Nucleierungs-, Mattierungs-, Fließmittel oder andere Verarbeitungshilfsmittel sowie Pigmente, Füll- und Verstärkungsstoffe in Frage.

Nucleierungs-, Mattierungs-, Fließmittel oder andere Verarbeitungshilfsmittel sind in Mengen bis zu 6 Gew.-%, bevorzugt von 0,2 bis 3,5 Gew.-%, bezogen auf die Gesamtmischung, im Polyester enthalten.

Pigmente, Füll- und Verstärkungsstoffe sind in Mengen bis zu 60 Gew.-%, bevorzugt von 1 bis 50 Gew.-%, bezogen auf die Gesamtmischung, im Polyester enthalten.

Die Zugabe der Radikalbildner erfolgt sinnvollerweise z. B. zusammen mit anderen Zuschlagstoffen, beispielsweise während des Austrags aus der Polykondensationsanlage über einen Extruder oder während der Compoundierung auf einem Mischextruder. Es können auch Ein- oder Zweischneckenkneter oder Co-Kneter verwendet werden. Die Mischtemperatur liegt zwischen 160 und 320 °C, vorzugsweise zwischen 220 und 280 °C, wobei die Verweilzeit zwischen wenigen Sekunden und mehreren Minuten liegt. Für eine einfachere Zudosierung des Radikalbildners in den Extruder kann es in einigen Fällen sinnvoll sein, ein Trägermaterial zu verwenden, beispielsweise erhalten durch Einarbeiten des Radikalbildners in ein geeignetes Polymer. Dies hat den Vorteil, daß so auch sehr geringe Mengen Radikalbildner sicher zudosiert werden können.

Das erfindungsgemäße Verfahren weist eine Reihe von Vorteilen auf:
- Es können große Mengen an Grundpolykondensat schnell und wirtschaftlich kontinuierlich oder diskontinuierlich hergestellt werden.
- Es kann sehr schnell die gewünschte hohe Endviskositätszahl erreicht werden.
- Insbesondere kleinere Mengen an Polyester können gezielt auf eine geforderte hohe Viskositätszahl wirtschaftlich eingestellt werden.
- Die guten Allgemeineigenschaften wie thermische bzw. mechanische Stabilität, Verarbeitungsstabilität, Eigenfarbe u. ä. werden nicht negativ beeinflußt.

Ausgehend von den erfindungsgemäßen Polyestern werden Formmassen erhalten, aus denen Folien, Ummantelungen, Profile, Rohre, Hohlkörper sowie technische Artikel nach dem Spritzgußverfahren hergestellt werden.

Der angeführte Parameter J wurde mit Hilfe der nachstehend genannten Meßmethode bestimt:

Die Viskositätszahl (J-Wert) wurde an Lösungen von 0,5 g Polyester in 100 ml Phenol/o-Dichlorbenzol (im Gewichtsverhältnis von 1 : 1) bei 25 °C gemessen (DIN 16 779).

Die mit Buchstaben gekennzeichneten Versuche sind nicht erfindungsgemäß.-

### Beispiele

### Versuch A1

100 Gew.-Teile eines thermoplastischen Polyesters mit einem J-Wert von 108 cm³/g, der durch Umesterung von Dimethylterephthalat mit Butandiol-1.4 unter Verwendung von iso-Propyltitanat als Katalysator und anschließender Polykondensation unter vermindertem Druck nach bekanntem Verfahren hergestellt wurde, werden ohne Radikalbildner in einem Zweiwellenkneter bei 235 bis 250 °C umgeschmolzen und anschließend ausgetragen, granuliert und getrocknet.

### Versuch A2

100 Gew.-Teile eines thermoplastischen Polyesters mit einem J-Wert von 108 cm³/g, der durch Umesterung von Dimethylterephthalat mit Butandiol-1.4 unter Verwendung von iso-Propyltitanat als Katalysator und anschließender Polykondensation unter vermindertem Druck nach bekanntem Verfahren hergestellt wurde, werden mit 1 Gew.-% 2.3-Dimethyl-2.3-diphenylbutan in einem Zweiwellenkneter bei 235 bis 250 °C umgeschmolzen und anschließend ausgetragen, granuliert und getrocknet.

### Versuch B

100 Gew.-Teile eines thermoplastischen Polyesters mit einem J-Wert von 110 cm³/g, der durch Umsetzung von Dimethylterephthalat mit einem Diol bestehend aus 95 Mol-% Butandiol-1.4 und 5 Mol-% Butendiol-1.4 unter Verwendung von iso-Propyltitanat als Katalysator und anschließender Polykondensation unter vermindertem Druck nach bekanntem Verfahren hergestellt wurde, werden ohne Radikalbildner in einem Zweiwellenkneter bei 235 bis 250 °C umgeschmolzen und anschließend ausgetragen, granuliert und getrocknet.

### Versuche 1 - 7

Der im Vergleich B beschriebene Versuch wird wiederholt, wobei jedoch der Polyester entsprechend der Tabelle mit verschiedenen Radikalbildnern in unterschiedlichen Konzentrationen in einem Zweiwellenkneter bei 235 bis 250 °C umgeschmolzen und anschließend ausgetragen, granuliert und getrocknet wird.

### Versuch C

100 Gew.-Teile eines thermoplastischen Polyesters mit einem J-Wert von 112 cm³/g, der durch Umesterung von Dimethylterephthalat mit einem Diol bestehend aus 80 Mol-% Butandiol-1.4 und 20 Mol-% Butendiol-1.4 unter Verwendung von iso-Propyltitanat als Katalysator und anschließender Polykondenstion unter vermindertem Druck nach bekanntem Verfahren hergestellt wurde, werden entsprechend der Tabelle ohne Radikalbildner in einem Zweiwellenkneter bei 235 bis 250 °C umgeschmolzen und anschließend ausgetragen, granuliert und getrocknet.

### Versuch 8 und 9

Der im Vergleich C beschriebene Versuch wird wiederholt, wobei jedoch der Polyester entsprechend der Tabelle mit verschiedenen Radikalbildnern in unterschiedlichen Konzentrationen in einem Zweiwellenkneter bei 235 bis 250 °C umgeschmolzen und anschließend ausgetragen, granuliert und getrocknet wird.

### Versuch D

100 Gew.-Teile eines thermoplastischen Polyesters mit einem J-Wert von 112 cm³/g, der durch Umesterung von Dimethylterephthalat mit einem Diol bestehend aus 97 Mol-% Butandiol-1.4 und 3 Mol-% Butendiol 1.4 unter Verwendung von iso-Propyltitanat als Katalysator und anschließender Polykondensation unter vermindertem Druck nach bekanntem Verfahren hergestellt wurde, wird ohne Radikalbildner in einem Zweiwellenkneter bei 235 bis 250 °C umgeschmolzen und anschließend ausgetragen, granuliert und getrocknet.

### Versuch 10

Der im Vergleich D beschriebene Versuch wird wiederholt, wobei jedoch der Polyester mit 1 Gew.-% 2.2'-Azo-bis-(2-acetoxy-propan), bezogen auf den Polyester in einem Zweiwellenkneter bei 235 bis 250 °C umgeschmolzen und anschließend ausgetragen, granuliert und getrocknet wird.

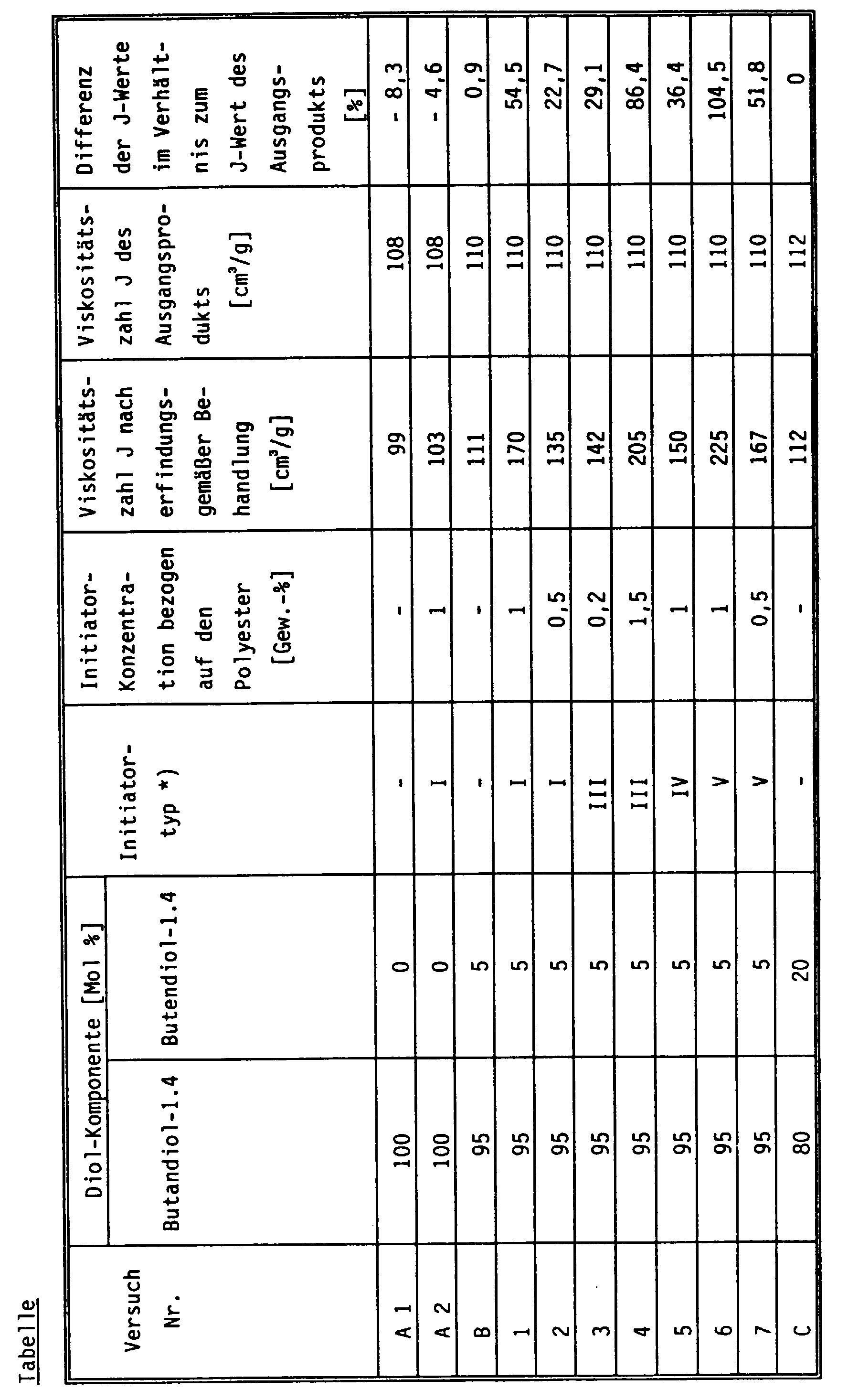

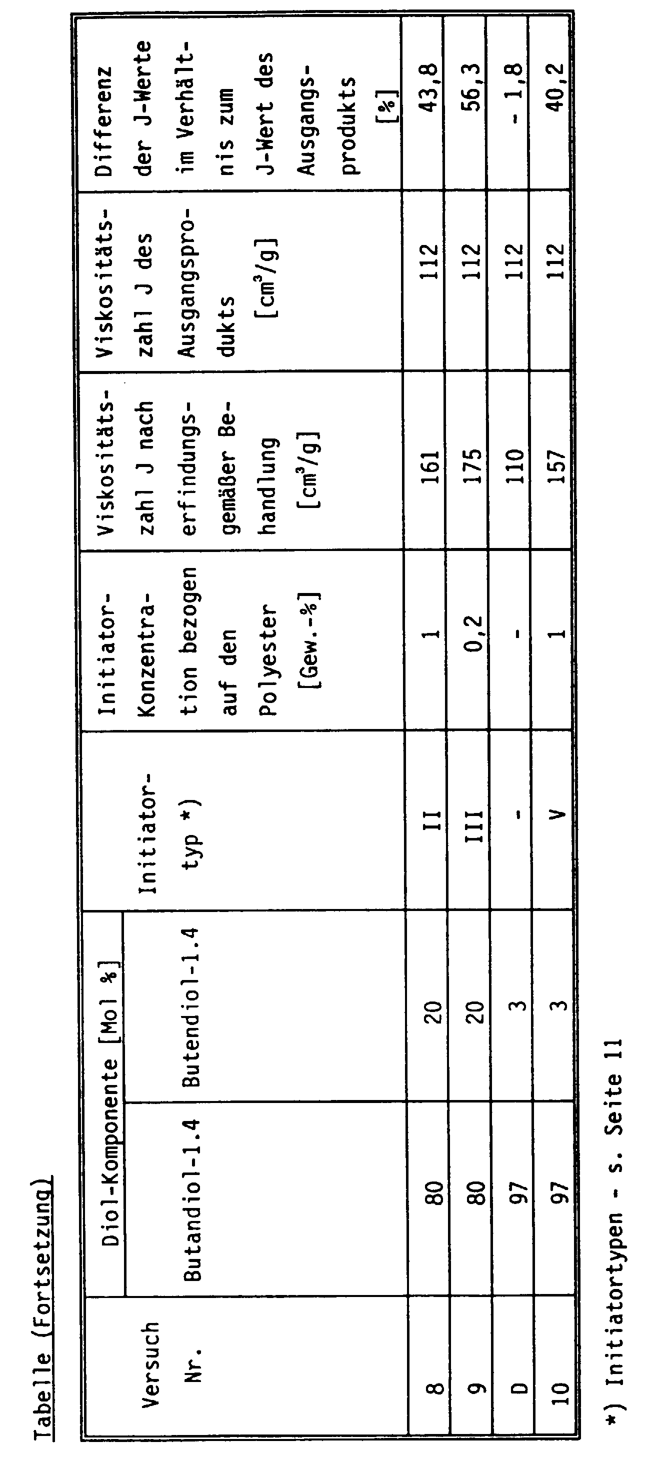

Als Radikalbildner wurden verwendet:
I. 2.3-Dimethyl-2.3-diphenylbutan (INTEROX® CCDFB der Fa. Peroxid-Chemie, Höllriegelskreuth)
II. Poly-1.4-diisopropylbenzol (INTEROX® VP 156 der Fa. Peroxid-Chemie, Höllriegelskreuth)
III. 3.3.6.6.9.9-Hexamethyl-1.2.4.5-tetraoxacyclononan (INTEROX® HMCN-40-IC-3 der Fa. Peroxid Chemie, Höllriegelskreuth)
IV. 2.5-Dimethyl-2.5-di(tert-butyl-peroxy)-hexin (3) (LUPERCO® 130 der Fa. elf atochem, Frankreich)
V. 2.2'-Azo-di(2-acetoxypropan) (LUAZO® AP der Fa. elf atochem, Frankreich)

## Patentansprüche

1. Verfahren zur Herstellung von hochmolekularem Polyester durch Umsetzen aromatischer Dicarbonsäure mit einem Gemisch aus Alkan- und Alkendiolen unter weitgehendem Ausschluß von Sauerstoff und in Gegenwart eines Katalysators,
dadurch gekennzeichnet,
daß die Polykondensationsstufe bis zu einer Viskositätszahl im Bereich von 50 - 140 cm³/g geführt wird und der so erhaltene Polyester in einer zweiten getrennten Stufe mit 0,001 bis 8 Gew.-% eines Radikalbildners, der bei Temperaturen im Bereich von 130 bis 350 °C mit einer Halbwertzeit von 5 s bis 120 Min. zerfällt, beaufschlagt und anschließend in der Schmelze bis zur notwendigen Viskositätszahl weiter reagiert.

2. Verfahren gemäß Anspruch 1,
dadurch gekennzeichnet,
daß die erste Polykondensationsstufe zu einer Viskositätszahl im Bereich von 80 bis 120 cm³/g geführt wird.

3. Verfahren gemäß Anspruch 1 und 2,
dadurch gekennzeichnet,
daß der Radikalbildner in einer Menge im Bereich von 0,01 bis 5 Gew.-% verwendet wird.

4. Verfahren gemäß den Ansprüchen 1 bis 3,
dadurch gekennzeichnet, daß der Radikalbildner bei Temperaturen im Bereich von 180 bis 280 °C zerfällt.

5. Verfahren gemäß den Ansprüchen 1 bis 4,
dadurch gekennzeichnet,
daß der Radikalbildner mit einer Halbwertzeit im Bereich von 1 bis 60 Min. zerfällt.

6. Verfahren gemäß den Ansprüchen 1 bis 5,
dadurch gekennzeichnet,
daß als Radikalbildner organische Peroxide verwendet werden.

7. Verfahren gemäß den Ansprüchen 1 bis 5,
dadurch gekennzeichnet,
daß der Radikalbildner eine labile C-C-Bindung aufweist.

8. Verfahren gemäß den Ansprüchen 1 bis 5,
dadurch gekennzeichnet,
daß der Radikalbildner eine labile organische N-N-Bindung aufweist.

9. Verfahren gemäß den Ansprüchen 1 bis 8,
dadurch gekennzeichnet,
daß eine endgültige Viskositätszahl von ≤ 400 cm³/g eingestellt wird.

10. Verfahren gemäß den Ansprüchen 1 bis 9,
dadurch gekennzeichnet,
daß eine endgültige Viskositätszahl im Bereich von 100 bis 300 cm³/g eingestellt wird.

## Claims

1. A process for the preparation of high molecular weight polyesters by reaction of an aromatic dicarboxylic acid with a mixture of alkane- and alkenediols and in the presence of a catalyst, oxygen largely being excluded, characterised in that the polycondensation stage is carried out up to a viscosity number in the range from 50 to 140 cm³/g, and the polyester thus obtained is charged in a second separate stage with 0.001 to 8% by weight of an agent which forms free radicals and dissociates with a half-life of 5 seconds to 120 minutes at temperatures in the range from 130 to 350°C, and is then further reacted in the melt until the necessary viscosity number is reached.

2. A process according to claim 1, characterised in that the first polycondensation stage is carried out to a viscosity number in the range from 80 to 120 cm³/g.

3. A process according to either of claims 1 and 2, characterised in that the agent which forms free radicals is used in an amount in the range from 0.01 to 5% by weight.

4. A process according to any of claims 1 to 3, characterised in that the agent which forms free radicals dissociates at temperatures in the range from 180 to 280°C.

5. A process according to any of claims 1 to 4, characterised in that the agent which forms free radicals dissociates with a half-life in the range from 1 to 60 minutes.

6. A process according to any of claims 1 to 5, characterised in that organic peroxides are used as agents which form free radicals.

7. A process according to any of claims 1 to 5, characterised in that the agent which forms free radicals has an unstable C-C bond.

8. A process according to any of claims 1 to 5, characterised in that the agent which forms free radicals has an unstable organic N-N bond.

9. A process according to any of claims 1 to 8, characterised in that a final viscosity number of ≤ 400 cm³/g is established.

10. A process according to any of claims 1 to 9, characterised in that a final viscosity number in the range from 100 to 300 cm³/g is established.

## Revendications

1. Procédé de fabrication de polyesters à poids moléculaire élevé par réaction d'un acide dicarboxylique aromatique avec un mélange d'alcandiols et d'alcénediols avec une large exclusion d'oxygène et en présence d'un catalyseur,
caractérisé en ce que
l'étape de polycondensation est menée jusqu'à une viscosité dans la zone de 50-140 cm³/g et le polyester ainsi obtenu est soumis dans une deuxième étape séparée à 0,001 jusqu'à 8 % en poids d'un formateur de radicaux, qui sé décompose à des températures comprises dans l'intervalle de 130 à 350°C avec une durée de demi-vie allant de 5 s à 120 min. et ensuite il réagit à nouveau dans la masse fondue jusqu'à la viscosité nécessaire.

2. Procédé selon la revendication 1,
caractérisé en ce que
la première étape de polycondensation est amenée à une viscosité comprise dans la zone de 80 à 120 cm³/g.

3. Procédé selon les revendication 1 et 2,
caractérisé en ce que
le formateur de radicaux est utilisé en une quantité comprise dans la zone de 0,01 à 5 % en poids.

4. Procédé selon les revendications 1 à 3,
caractérisé en ce que
le formateur de radicaux se décompose à des températures comprises entre 180 et 280°C.

5. Procédé selon les revendications 1 à 4,
caractérisé en ce que
le formateur de radicaux se décompose à une durée de demi-vie dans l'intervalle de 1 à 60 min.

6. Procédé selon les revendications 1 à 5,
caractérisé en ce que
comme formateurs de radicaux on utilise des peroxydes organiques.

7. Procédé selon les revendications 1 à 5,
caractérisé en ce que
le formateur de radicaux comporte une liaison C-C labile.

8. Procédé selon les revendications 1 à 5
caractérisé en ce que
le formateur de radicaux comporte une liaison organique N-N labile.

9. Procédé selon les revendications 1 à 8,
caractérisé en ce que
la viscosité définitive de ≤ 400 cm³/g est ajustée.

10. Procédé selon les revendications 1 à 9,
caractérisé en ce que
la viscosité définitive située dans l'intervalle de 100 à 300 cm³/g est ajustée.
